Europäisches Patentamt

European Patent Office

Office européen des brevets

(11) Publication number: 0 549 185 A2

# EUROPEAN PATENT APPLICATION

(21) Application number: 92311193.4

(22) Date of filing: 09.12.92

(51) Int. Cl.5: G06F 15/72

(30) Priority: 23.12.91 US 812264

(43) Date of publication of application:
30.06.93 Bulletin 93/26

(84) Designated Contracting States:
DE FR GB

(71) Applicant: GENERAL ELECTRIC COMPANY
1 River Road
Schenectady, NY 12345(US)

(72) Inventor: Cline, Harvey Ellis
845 Harris Avenue
Schenectady, New York 12309(US)
Inventor: Lorensen, William Edward
14 Hearthside Drive
Ballston Lake, New York 12019(US)
Inventor: Ludke, Siegwalt
10 Dawn Drive
Scotia, New York 12302(US)

(74) Representative: Lupton, Frederick et al
LONDON PATENT OPERATION, G.E.
TECHNICAL SERVICES Co. INC., Essex
House, 12/13 Essex Street
London WC2R 3AA (GB)

(54) System for 3D scan conversion of a polygonal model into a point and normal format, displayed utilizing an accelerator circuit.

(57) A graphics workstation displays a polygonal model generated with computer aided design (CAD) software or volumetric data by first converting the the model or volumetric data to a point and normal display list. The "dividing cubes" method is used to convert the polygonal model, while the "marching cubes" method is used to convert the volumetric data. A model clipping circuit determines points which are to be displayed corresponding to the model cut plane desired. A rotate circuit transforms the point and normal display list according to the desired orientation and also converts the normal vectors into levels of shading according to the direction of the normal vector. The voxels in the transformed display list are clipped to a desired screen viewing region by a screen clipping circuit. A depth buffer, compare circuit, and an AND circuit determine voxels which do not lie behind other surfaces, and are proper to display. The AND circuit allows update of the depth buffer and an image memory buffer, the image memory buffer being a screen map. The image memory is displayed on a monitor. The models are manipulated and cut much more rapidly on a low end workstation than would be possible using conventional methods.

Fig. 1

## CROSS REFERENCE TO RELATED APPLICATIONS

This application is related to applications *System For Displaying Solid Cuts For Surfaces of Solid Models* by William E. Lorensen, Harvey E. Cline, Bruce Teeter, and Siegwalt Ludke, Ser. No. (Docket No.RD-21,165), *Solid Models Generation By Span Method Using Dividing Cubes*, by Harvey E. Cline, William E. Lorensen and Siegwalt Ludke, Ser. No. (Docket No. RD-21,335), and *Apparatus and Method For Displaying Surgical Cuts in Three-Dimensional Models* by Harvey E. Cline, William E. Lorensen and Siegwalt Ludke, Ser. No. (Docket No. RD-21,827), all filed simultaneously with this application, and all assigned to the present assignee.

## BACKGROUND OF THE INVENTION

### 1. Field of the Invention

The present invention relates to a three-dimensional (or 3D) graphics workstation and more specifically a three-dimensional graphics workstation which can rapidly manipulate both CAD/CAM and volumetric data models.

### 2. Description of Related Art

Conventional computer graphic methods display polygonal models by first transforming the model into a wireframe. A wireframe is network of lines connecting the vertices of a polygonal model. The wireframe is then projected onto the image plane. The projected image is then shaded by two-dimensional scan conversion. Scan conversion is the process of assigning intensity values to voxels intersecting the polygons and creating an image resembling a solid shaded 3D model. Each polygon is projected onto the image plane and the intensity of the vertex pixels is calculated. This intensity is proportional to the component of the vector normal to the surface of the polygon at a desired pixel, which is parallel to the direction of simulated impinging light. The polygon is scanned and the vertex intensities interpolated and assigned to each pixel in the area of the polygon.

Surfaces which are behind other surfaces are hidden. Usually a depth buffer, being a memory element, is used to store the present depth of each pixel in the 3D image so that only the visible surface can be displayed. The depths of subsequent pixels are compared to the present depths of pixels at the same location in the image from different surfaces. The depth at each pixel is also interpolated and stored in a depth buffer and compared with the previous depth value to update only the visible surface of the 3D model. For additional details, see *Fundamentals of Interactive Computer Graphics* by Foley and Van Dam, Addison-Wesley Press 1982, chapter 8, pages 267-318.

These models may be manipulated by rotating them and displaying portions of the models. Transformations of coordinates are used to rotate the model with a 4x4 matrix equation. After transformation, the transformed model is displayed.

The polygonal models may be generated by conventional CAD/CAM methods or from volume data as described in the "marching cubes" method of U.S. Patent 4,710,876, *System and Method for the Display of Surface Structures Contained Within the Interior Region of a Solid Body* by Harvey E. Cline and William E. Lorensen issued Dec. 1, 1987, assigned to the present assignee and hereby incorporated by reference. The volume data obtained from imaging systems such as Magnetic Resonant Imaging (MRI), Computed Axial Tomography (CAT), Positron Emission Tomography (PET), etc. is converted into lists of polygons for display on a graphics workstation. Each polygon is described by points and normal vectors associated with each vertex. Since all vertices of each polygon must be displayed in order to display the model, a great deal of processing power is required to rapidly manipulate and display each model.

Another method of displaying models, called the "dividing cubes" method, begins with volume data and creates a surface described by a number of points and normals vectors associated with each point rather than polygons. The "dividing cubes" method has been used to display the surfaces of volume medical data and is described in U.S. Patent 4,719,585, issued Jan. 12, 1988, *Dividing Cubes System and Method for the Display of Surface Structures Contained Within the Interior Region of a Solid Body* by Harvey E. Cline, Siegwalt Ludke, and William E. Lorensen, assigned to the present assignee and incorporated by reference. This method allows much more rapid rotation and display of a model as compared to conventional display methods, and requires far less processing power. This method, however, requires volume data and cannot utilize CAD/CAM display data.

## SUMMARY OF THE INVENTION

The invention is set forth in Claims 1 and 4.

A feature of the present invention is to provide a display system for a graphic workstation having improved performance.

Another feature of the present invention is to make practical manipulation of solid models on a low end workstation which would otherwise be impractical due to long processing time.

Another feature of the present invention is to provide a workstation capable of manipulating and displaying CAD/CAM, polygonal and volume data models.

The graphics workstation is capable of manipulating polygonal models from computer aided design or three-dimensional data models with the aid of a custom accelerator circuit employs a 3D scan converting processor to 3D scan convert the polygonal models to a point and normal display list that the processor stores in a point and normal display list memory. The 3D scan converting processor can also implement the "dividing cubes" method for converting the three-dimensional data for to a point and normal display list. A user selects model cut planes, three-dimensional orientation, and a workstation view by the use of input devices. A model clipping circuit determines points within the model cut planes. A rotate circuit rotates the point and normal display list and determines shading based upon the orientation of the normal vector at each point. A screen clipping circuit determines points within a region defined by workstation view. A display circuit displays a three-dimensional shaded image of multiple surfaces from the rotated point and display list that are within the model cut planes and the screen view. This results in a display system for a workstation capable of displaying both CAD/CAM models and volume models as shaded three-dimensional solid surfaces that can be sliced in multiple planes, selectively displayed and otherwise manipulated. The image is redrawn at a rate of several times per second on a low-end graphics workstation, allowing near-realtime manipulation.

## BRIEF DESCRIPTION OF THE DRAWINGS

The features of the invention believed to be novel are set forth with particularity in the appended claims. The invention itself, however, both as to organization and method of operation, together with further objects and advantages thereof, may best be understood by reference to the following description taken in conjunction with the accompanying drawing in which:

Fig. 1 is a simplified block diagram of the system of the present invention.

Fig. 2 is an illustration of a model to be displayed intersecting a model clip box and a screen clip box according to the present invention.

Fig. 3 is a perspective view illustrating the intersection of a polygon with a cubic array of voxels, and the projection of the polygon onto a plane.

Fig. 4 is an illustration of the polygon of Fig. 3 projected onto an orthogonal plane, and the corresponding point and normal vector representation of the polygon.

Fig. 5 is a graphic image produced according to the present invention.

## DETAILED DESCRIPTION OF THE INVENTION

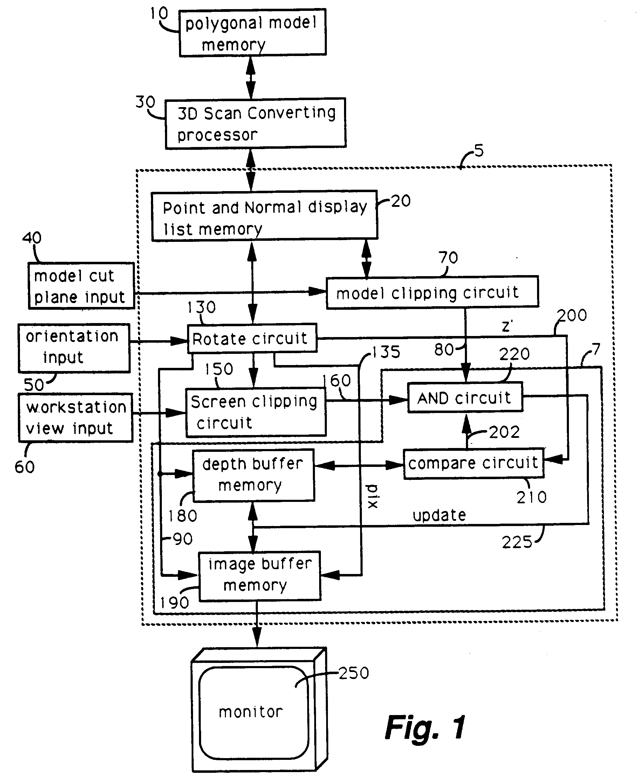

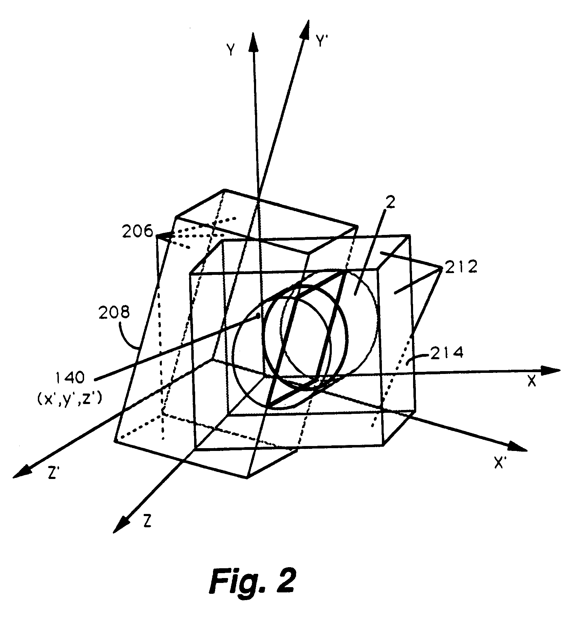

Reference is made to Figs 1 and 2 where a polygonal model generated either from a computer aided design workstation (CAD) or from volumetric data is stored in a polygon model memory 10. Polygon model memory 10 may be workstation memory or disk storage. A 3D scan converting processor 30 reads the polygonal model from polygon model memory 10 and converts the polygonal model to a point and normal display list comprised of points (x,y,z) and normal vectors associated with each point $(n_x, n_y, n_z)$. The point and normal display list is stored in point and normal display list memory 20 of an accelerator board 5. Many elements of the accellerator board are similar to elements in U.S. Patent 4,985,834 *System and Method Employing Pipelined Parallel Circuit Architecture For Displaying Surface Structures of the Interior Region of a Solid Body* by Harvey E. Cline, Richard I. Hartley, Siegwalt Ludke and Sharbel E. Noujaim issued Jan. 15, 1991 assigned to the present assignee and hereby incorporated by reference.

A user actuates input devices 40 to select sections through a model 2 to be displayed, the sections being the model cut planes 206. These planes are defined in reference to model 2 and remain fixed with respect to model 2 throughout rotation of model 2. The user actuates input devices 50 to select a three-dimensional orientation of model 2 in space, and actuates input devices 60 to select screen view planes 212 to cut through the model 2. The screen view planes 212 remain fixed with respect to a monitor 250 screen and the X,Y,Z coordinate system (workstation space), but change relative to the model 2, the X',Y',Z' coordinate system (model space) as the model is rotated. The parameters from the input devices 40, 50, 60 are used to manipulate and display portions of the 3D model.

A model clipping circuit 70 receives the model cut planes 206 from input device 40 and determines a model clip box 208 defined by the model cut planes 206. Model clipping circuit 70 then compares each point (x,y,z) in the display list memory 20 to determine if it is within the model clip box 208. If a point (x,y,z) lies within the model clip box 208, a select line 80 connecting model clipping circuit 70 and an AND circuit 220 is set 'high' by circuit 70.

A rotate circuit 130 receives the orientation input parameters from input device 50 and creates a 4X4 transformation matrix. Both point (x,y,z) and the normal vector $(n_x,n_y,n_z)$ are transformed by rotate circuit 130 to yield a transformed point (x',y',z') 140 and a pixel intensity used for shading the image. Rotate circuit 130 transforms the point (x,y,z) and the normal vectors $(n_x,n_y,n_z)$ according to the following equations:

$$x' = m_{11}x + m_{12}y + m_{13}z + m_{14}$$
$$y' = m_{21}x + m_{22}y + m_{23}z + m_{24}$$
$$z' = m_{31}x + m_{32}y + m_{33}z + m_{34}$$
$$pix = m_{41}n_x + m_{42}n_y + m_{43}n_z$$

where "$m_{11} \ldots m_{43}$" are matrix elements calculated to orient and translate the model and pix is the calculated pixel intensity used to shade the surface. (Matrix element $m_{44}$ is 0.) Rotate circuit 130 passes the rotated coordinate (x',y') along an address bus 90 to both a depth buffer memory 180 and an image buffer memory 190. The coordinate (x',y') is used as an address of both memories. Rotate circuit 130 also passes the pixel intensity pix along bus 135 to image buffer memory 190.

A screen clipping circuit 150 receives the screen view planes 212 from input device 60 and creates a screen clip box 214 similar to the model clip box 208, but which is stationary with respect to monitor screen 250. The transformed point (x',y',z') 140 is compared to the screen clip box 214 in the space of the workstation. If point (x',y',z') 140 is within the screen clip box 214, line 160 connecting screen clipping circuit 150 to AND circuit 220 is set 'high' by circuit 150.

A display circuit 7 displays an image exposed surfaces created from the transformed points within the desired region. The image resembles a solid object with superficial surfaces being visible and surfaces which lie behind the superficial surfaces being hidden. The display circuit is comprised of depth buffer memory 180, AND circuit 220, image buffer memory 190 and a compare circuit 210.

Compare circuit 210 receives a depth coordinate z' along a bus 200 and compares the depth z' with a present value in the depth buffer 180 at address (x',y'). If the depth z' of the present point (x',y',z') is closer to the viewer (i.e., has a smaller value) than the previous depth stored in depth buffer memory 180 at address (x',y'), then compare circuit 210 sets a depth line 202 connected to AND circuit 220 'high'.

AND circuit 220 sets an 'update' line 225 connected to both the depth buffer memory 180 and the image buffer memory 190 'high' when it senses lines 80, 160 and 202 all being 'high', causing the pixel intensity pix to be stored at address (x',y') of the image buffer memory thereby shading an image displayed on monitor 250. This also causes depth z' to be stored at address (x',y') of depth buffer memory, thereby updating the present depth at address (x',y'). After each display list in the model has been processed, the shaded 3D image is transferred to a monitor 250 for display.

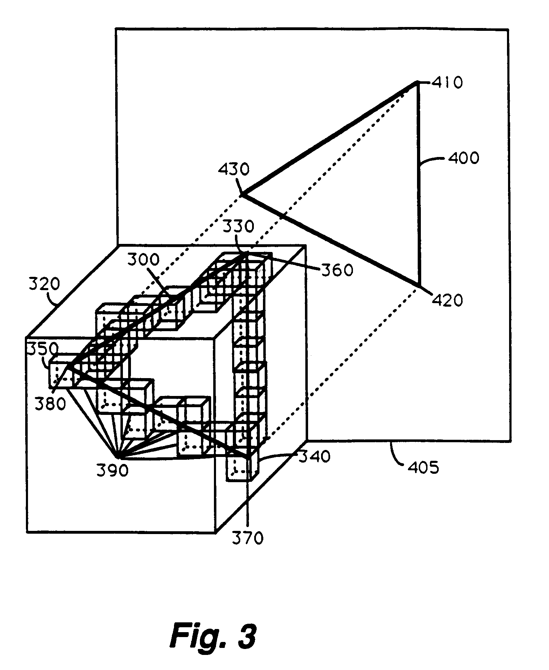

The method is further illustrated in Fig. 3 by starting with the first polygon 300 in the polygon model memory 10 (Fig. 1). Each voxel that intersects the polygon 300 must be found, and a normal vector at each center point of the intersecting voxel must be interpolated. Polygon 300 is positioned obliquely in three-dimensions with reference to the coordinate system of the workstation, or workstation space. The polygon 300 is superimposed on an array of cubic voxels 320 and aligned with the 'workstation space' with each voxel equal in size to a screen pixel size on monitor 250 (Fig. 1). 3D scan converting processor 30 of Fig. 1 finds voxels 330, 340, 350 of Fig. 3 which contain polygon vertices 360, 370, 380 respectively. 3D scan converting processor 30 of Fig. 1 then determines voxels intersecting the line between vertices 370 and 380 of Fig. 3, shown as voxels 390, by simple geometry.

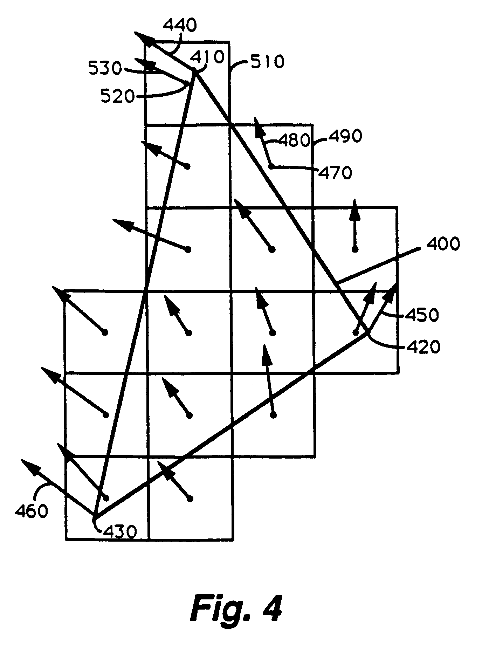

In Fig. 3, a plane 405 of the workstation space most nearly parallel to polygon.300 is chosen. Polygon 300 is projected onto the chosen plane 405 of the 'workstation space' to obtain projected triangle 400 of Figs. 3 and 4. Projected triangle 400 has vertices 410, 420, 430 and associated normal vectors 440, 450, 460 at its vertices, respectively. 3D scan converting processor 30 of Fig. 1 determines which pixels intercept vertex 410 of the polygon. As shown in Fig.4, a pixel 510 is determined to intercept vertex 410. The distance between a center point 520 of pixel 510 and vertex 440 is used to perform a three-dimensional interpolation of vectors 440, 450, 460 to produce a normal vector 530. 3D scan converting processor 30 (Fig. 1) stores the (x,y,z) coordinates for the center point 520 of pixel 510 and the interpolated normal vector 530 in point and normal display list memory 20 of Fig. 1.

3D scan converting processor 30 of Fig. 1 continues this conversion process for each voxel intersecting the polygon 380 (Fig. 3) in sequence and stores the center points (x,y,z) and normal vectors $(n_x,n_y,n_z)$ associated with each point in the point and normal display list memory 20 of Fig. 1. There may be one (as shown) or more voxels at each location in this projection. A typical point 470 and normal vector $(n_x,n_y,n_z)$ 480 of the voxel 490 of Fig. 4 is a member of the surface display list. The polygonal model may comprise one or more surfaces that are composed of polygons that will be converted to a point and normal display list and stored in the point and normal display list memory 20 of Fig. 1. This aformentioned process of converting polygons is repeated for all polygons in the polygonal model.

Data that is in the form of volumetric data can, in the alternative, be converted by the "dividing cubes" method (as described in the "dividing cubes" patent incorporated by reference above) into a point and normal display list and placed directly into the point and normal display list memory 20 of Fig. 1, bypassing the method of converting a polygonal model into a point and normal display list described above.

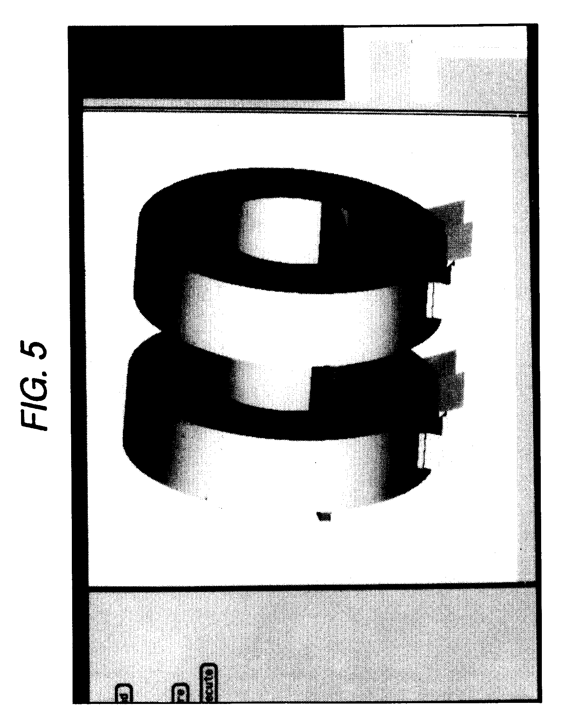

Fig. 5 is a graphic image produced according to the present invention employing a 20 MHz 6-layer standard VME bus architecture circuit board constructed according to the present invention and placed in a workstation (e.g., a Sun 4-110, sold by Sun Microsystems). A polygonal model of a magnetic resonance system having 3000 polygons was scan converted into a point and normal display list having 600,000 points and normal vectors. The 3D model was rotated, translated and cut at a rate of 6 frames/sec. The same workstation can also used to display volumetric models constructed from three-dimensional medical data using the "dividing cubes" method to produce point and normal display lists.

For comparison purposes, the same workstation (Sun 4-110), without incorporating the present invention, would require roughly 16.7 seconds to manipulate and display the same model, equating to roughly 100 times slower than if the invention were employed.

While several presently preferred embodiments of the invention have been described in detail herein, many modifications and variations will now become apparent to those skilled in the art. It is, therefore, to be understood that the appended claims are intended to cover all such modifications and variations as fall within the true spirit of the invention.

## Claims

1. A graphics workstation for manipulating polygonal models comprising:

    a) a polygonal model memory for storing a set of polygons from the polygonal models;

    b) a point and normal display list memory for storing point and normal display lists;

    c) a 3D scan converting processor for scan converting a set of polygons in said polygonal model memory to a point and normal display list comprised of points $(x,y,z)$ and normal vectors $(n_x,n_y,n_z)$ and storing the point and normal display list in the point and normal display list memory;

    d) a first input device for defining model cut planes;

    e) a second input device for defining a three-dimensional orientation;

    f) a third input device for defining screen view planes;

    g) a model clipping circuit for creating a signal indicating when a point $(x,y,z)$ is within the region specified by model cut planes defined by the first input device;

    h) a rotate circuit for transforming each point $(x,y,z)$ and normal vector $(n_x,n_y,n_z)$ in the display list according to the three-dimensional orientation provided by the second input device, to a transformed point $(x',y',z')$ having an address $(x',y')$ and a depth $z'$, and a pixel intensity pix;

    i) a screen clipping circuit for creating a signal indicating when a transformed point $(x',y',z')$ is within a region defined by screen view planes provided by the third input device; and

    j) a display circuit responsive to the signals created by the model clipping circuit and the screen clipping circuit for forming a three-dimensional (3D) image of multiple surfaces from transformed points $(x',y',z')$ and the pixel intensity pix in response to the signals received from the model clipping and screen clipping circuits; and

    k) a display monitor for displaying the 3D image.

2. The graphics workstation of claim 1 wherein the display circuit comprises:

    a) a depth buffer memory coupled to the rotate circuit for receiving an address $(x',y')$ from the rotate circuit and storing a depth at address $(x',y')$;

    b) a compare circuit coupled to the rotate circuit and the depth buffer memory, said compare circuit being adapted to

        1. receive a signal representing the depth $z'$ from the rotate circuit,

        2. read the present depth stored in address $(x',y')$ of the depth buffer memory and compare it to depth $z'$ received from the rotate circuit, and

        3. create a signal indicating whether depth $z'$ is closer to the user than the present depth stored in the depth buffer memory;

    b) an AND circuit adapted to

        1. receive a signal from the model clipping circuit indicating if the point $(x',y',z')$ is within the region defined by the model cut planes,

2. receive a signal from the screen clipping circuit indicating if the point (x',y',z') is within the region defined by the screen view planes, and

3. receive the signal from the compare circuit, and

4. create an update signal indicating when point (x',y',z') is within both the regions defined by the model cut planes and the screen view planes and has a depth z' less than the depth in the depth buffer memory at address (x',y'); and

c) an image buffer memory having an address corresponding to each point of the display monitor, said image buffer memory being adapted to receive the address (x',y') and the signal indicating the pixel intensity pix from the rotate circuit, to receive the update signal created by the AND circuit, and to store the pixel intensity pix at address (x',y') creating an image to be displayed on the monitor.

3. The graphics workstation of claim 1 wherein the 3D scan converting processor scan is adapted to convert a set of polygons having vertices and a normal vector associated with each vertex to a point and normal display list by executing the steps of:

a) choosing a first polygon as an active polygon of the polygonal model from the polygonal model memory;

b) identifying a voxel which contains each vertex of the active polygon;

c) choosing a line segment connecting two vertices of the polygon as the present line segment;

d) choosing a line segment point along the present line segment;

e) determining which voxel the line segment point is in;

f) determining the center point (x,y,z) of the voxel containing the line segment point;

g) interpolating the polygon normal vectors in three dimensions at the voxel center point(x,y,z) to determine a normal vector $(n_x,n_y,n_z)$;

h) storing point (x,y,z) and normal vector $(n_x,n_y,n_z)$ in the point and normal display list memory;

i) choosing a next point along the present line segment;

j) repeating steps "e" - "i" until the end of the present line segment is reached;

k) choosing a next line segment of the active polygon as the present line segment;

l) repeating steps "d" - "k" until all line segments of the active polygon have been chosen;

m) choosing a next polygon as the active polygon; and

n) repeating steps "b" - "m" until all polygons of the polygonal model have been chosen.

4. A graphics workstation for manipulating polygonal models or three-dimensional data models comprising:

a) a model memory for storing sets of polygons from the polygonal models or three-dimensional data;

b) a point and normal display list memory for storing point and normal display lists;

c) a 3D scan converting processor adapted to

1. scan convert a set of vertices of a plurality of polygons and normal vectors for each vertex of each polygon in the polygonal model memory to a point and normal display list comprised of points (x,y,z) and normal vectors $(n_x,n_y,n_z)$ for polygonal models,

2. implement the "dividing cube" method for converting the three-dimensional data for to a point and normal display list comprised of points (x,y,z) and normal vectors $(n_x,n_y,n_z)$, and

3. store the point and display list in the point and display list memory;

d) a first input device adapted to define model cut planes;

f) a second input device adapted to define a three-dimensional orientation;

g) a third input device adapted to define a workstation view region;

h) a model clipping circuit for determining points to display in a region specified by model cut planes defined by the first input device;

i) a rotate circuit for transforming each point (x,y,z) and normal vector $(n_x,n_y,n_z)$ in the display list according to the three-dimensional orientation provided by the second input device, to a transformed point (x',y',z') and a pixel intensity pix;

j) a screen clipping circuit for determining points (x',y',z') to display in a region defined by workstation view provided by the third input device; and

k) a display circuit responsive to the signals created by the model clipping circuit and the screen clipping circuits for forming a three-dimensional (3D) image of multiple surfaces from transformed points (x',y',z') and the pixel intensity pix in response to the signals received from the model clipping and screen clipping circuits.

5. The graphics workstation of claim 4 wherein the display circuit comprises:

a) a depth buffer memory coupled to the rotate circuit for receiving an address (x',y') from the rotate circuit and storing a depth at address (x',y');

b) a compare circuit coupled to the rotate circuit and the depth buffer memory, said compare circuit being adapted to

1. receive a signal representing the depth z' from the rotate circuit,

2. read the present depth stored in address (x',y') of the depth buffer memory and compare it to depth z' received from the rotate circuit, and

3. create a signal indicating whether depth z' is closer to the user than the present depth stored in the depth buffer memory;

b) an AND circuit adapted to

1. receive a signal from the model clipping circuit indicating if the point (x',y',z') is within the region defined by the model cut planes,

2. receive a signal from the screen clipping circuit indicating if the point (x',y',z') is within the region defined by the screen view planes,

3. receive the signal from the compare circuit, and

4. create a signal indicating when point (x',y',z') is within both the regions defined by the model cut planes and the screen view planes and has a depth z' less than the depth in the depth buffer memory at address (x',y');

c) a display monitor; and

d) an image buffer memory having an address corresponding to each point of the display monitor, said image buffer memory being adapted to receive the address (x',y') and the signal indicating the pixel intensity pix from the rotate circuit, to receive the update signal created by the AND circuit, and to store the pix at address (x',y').

6. The graphics workstation of claim 1 wherein the 3D scan converting processor executes the "marching cubes" method to display images of models generated from 3D volume data.

*Fig. 1*

**Fig. 2**

**Fig. 3**

**Fig. 4**

FIG. 5